# EUROPÄISCHE PATENTANMELDUNG

(11) **EP 2 116 327 A1**
(43) Veröffentlichungstag der Anmeldung: **11.11.2009**
(21) Anmeldenummer: 08008677.0
(22) Anmeldetag: 08.05.2008
(51) Int. Cl.: B23Q 11/12

(54) **Werkzeugmaschine mit Wärmerohr**

(71) Anmelder: SIEMENS AKTIENGESELLSCHAFT, 80333 München (DE)
(72) Erfinder: Die Erfindernennung liegt noch nicht vor

(57) **Zusammenfassung**

Die Genauigkeit und Zuverlässigkeit von Werkzeugmaschinen soll verbessert werden. Daher wird eine Werkzeugmaschine mit einer Spindel (1) zu rotatorischen Bewegung eines Werkzeugs, einem Motor (7) zum Antrieb der Spindel (1) und einem Spindelstock (3), in oder an dem die Spindel angeordnet ist, vorgeschlagen. Mindestens ein Wärmerohr (12,13,14,15) ist in oder an dem Spindelstock (3) oder der Spindel (1) angeordnet, um ein Temperaturgefälle in der jeweiligen Komponente zu reduzieren. Damit wird eine homogenere Temperaturverteilung in der Spindel (1) bzw. dem Spindelstock (3) erzielt, wodurch die Genauigkeit der Werkzeugmaschine zunimmmt.

## Beschreibung

Die vorliegende Erfindung betrifft eine Werkzeugmaschine mit einer Spindel zur rotatorischen Bewegung eines Werkzeugs, einem Motor zum Antrieb der Spindel und einem Gehäuse, in dem die Spindel untergebracht ist.

Die Genauigkeit von Werkzeugmaschinen wird neben mechanischen Effekten insbesondere durch thermische Effekte bedingt. Temperaturunterschiede in Spindelstöcken und Maschinenkomponenten führen zu thermischen Verlagerungen. Diese können je nach Maschinentyp und -aufbau mehrere hundertstel bis zu mehreren zehntel Millimeter betragen. Selbst Temperaturunterschiede von wenigen Grad Celsius können zu beachtlichen Verbiegungen bzw. unsymmetrischen Verlagerungen führen. Aus diesem Grund ist es erforderlich, die Temperatur in Werkzeugmaschinenstrukturen möglichst homogen zu halten. Darüber hinaus ist auch angestrebt, die Temperatur der Werkzeugmaschinenkomponenten möglichst konstant zu halten, damit keine zeitlichen Temperaturschwankungen die Genauigkeit der Werkzeugmaschine negativ beeinflussen.

Gegenwärtig werden Werkzeugmaschinenstrukturen mit flüssigen Medien (Wasser oder Öl) bzw. mit Luft temperiert. Um eine möglichst homogene Temperatur in einem Bauteil zu erreichen, sind meist aufwändige bzw. komplizierte Kühlkanalstrukturen im Inneren erforderlich. Diese sind meist schwierig herzustellen und verteuern Werkzeugmaschinenkomponenten erheblich. Weiterhin sind aufwändige Kühlaggregate, bestehend aus Wärmetauscher, Kompressor, Pumpe und Regelung, erforderlich. Derartige Aggregate sind teuer in der Anschaffung, im Betrieb und in der Wartung.

Auf dem Gebiet der Raumfahrt und der Satellitentechnik sind seit Ende der 1950er Jahre Wärmerohre bekannt, um einen verbesserten Wärmeaustausch zu realisieren. Wärmerohre sind Wärmeübertragungselemente, die unter Ausnutzung von Verdampfungs- und Kondensationswärme eines Stoffes einen hohen Wärmestrom erlauben. Eine spezielle Ausführungsform sind so genannte "Heat-Pipes", bei denen mit Kapillaren nach dem Dochtprinzip die Flüssigkeit zum Verdampfer zurückgeführt wird. Das kondensierte Fluid fließt daher lageunabhängig in der Kapillare zurück zum Verdampfer.

Ein Wärmerohr besteht aus einem hermetisch gekapselten Rohr mit je einer Wärmeübertragungsfläche für Wärmequelle und Wärmesenke. Das Rohr ist mit einer gewissen Menge eines Wärmeübertragungsmediums gefüllt. Das Medium ist zum Teil flüssig und füllt den restlichen Raum als Dampf aus. Der Druck im Rohr ist sehr klein und die Flüssigkeit an der heißen Seite beginnt bei Wärmeentwicklung sofort zu verdampfen. Dadurch wird dem kühlenden Material Wärme entzogen. Der Dampf strömt zur Senke bzw. Kühlzone und muss die Verdampfungswärme wieder abgeben. Dies geschieht zum Teil durch Konvektion zu einer kühleren Umgebung. Dabei findet die Kondensation des Dampfes statt und der flüssig gewordene Dampf kehrt zum Flüssigkeitsbereich zurück. Dadurch ist die Flüssigkeit wieder für eine Wärmeaufnahme bereit. Es findet somit ein Kreislauf statt. Die Zirkulation des Mediums im Wärmerohr wird gegebenenfalls durch Schwerkraft und/oder durch Kapillarwirkung unterstützt. Es kann so ein Wärmetransport sehr effizient über begrenzte Entfernungen erzielt werden.

Die Aufgabe der vorliegenden Erfindung besteht darin, die Genauigkeit und Zuverlässigkeit einer Werkzeugmaschine mit einfachen Mitteln zu erreichen bzw. zu verbessern.

Erfindungsgemäß wird diese Aufgabe gelöst durch eine Werkzeugmaschine mit einer Spindel zur rotatorischen Bewegung eines Werkzeugs, einem Motor zum Antrieb der Spindel und einem Spindelstock, in oder an dem die Spindel angeordnet ist, wobei mindestens ein Wärmerohr in oder an dem Spindelstock oder der Spindel angeordnet ist, um ein Temperaturgefälle in der jeweiligen Komponente zu reduzieren.

Vorzugsweise besitzt die Werkzeugmaschine eine aktive Kühleinrichtung, um ein Ende des Wärmerohrs aktiv zu kühlen. Die Kühleinrichtung erzeugt dabei aktiv einen Kühlmediumsstrom, z.B. mit einer Flüssigkeit oder mit einem Gas, der das Ende des Wärmerohrs umspült. Dadurch lässt sich das Wärmerohr nicht nur zur Homogenisierung der Temperatur, sondern auch zur Kühlung einsetzen.

In vorteilhafter Weise wird durch die erfindungsgemäße Ausstattung einer Werkzeugmaschine mit mindestens einem Wärmerohr auf einfache und effiziente Weise eine homogene Temperierung der Maschine bzw. einer Maschinenkomponente erreicht. Insbesondere führt diese homogene Temperierung zu einer Steigerung der Genauigkeit und der Zuverlässigkeit der Werkzeugmaschine.

Vorzugsweise besitzt das Gehäuse der Werkzeugmaschine einen Spindelstock, und das mindestens eine Wärmerohr ist in oder an dem Spindelstock angeordnet. Dadurch lässt sich vermeiden, dass sich hohe Temperaturdifferenzen an Spindelstöcken einstellen, die oftmals größere Ausdehnungen besitzen, welche einen Temperaturausgleich grundsätzlich erschweren.

Entsprechend einer speziellen Ausführungsform können an dem Gehäuse oder dem Spindelstock zumindest zwei Führungsschuhe zur beweglichen Befestigung an einem Maschinenkörper angebracht sein, wobei das mindestens eine Wärmerohr parallel zu einer Geraden, welche durch je einen Punkt in jedem der zwei Führungsschuhe definiert ist, verläuft. Dies hat den Vorteil, dass Wärmedifferenzen zwischen den Führungsschuhen besser ausgeglichen bzw. auf den dazwischenliegenden Strecken gemindert werden können, wodurch unsymmetrische Verlagerungen oder Verbiegungen vermieden werden.

Weiterhin kann das mindestens eine Wärmerohr parallel zu der Drehachse der Spindel verlaufen. Dies führt zu einer Homogenisierung der Temperatur entlang der Spindelachse, was oftmals notwendig ist, denn die Spindel wird meist an einem Ende unter Wärmeerzeugung angetrieben und am anderen Ende (bei der Werkzeugaufnahme) durch ein Kühlmittel gekühlt.

Darüber hinaus kann die Spindel von dem Motor durch einen Riemen angetrieben sein, wobei das mindestens eines Wärmerohr parallel zu dem Riemen verläuft. Dieser Verlauf des Wärmerohrs reduziert einen Temperaturgradienten beispielsweise in einem Spindelstock, der durch einen Elektromotor als Antrieb und Wärmequelle gegenüber einer entfernten und gegebenenfalls gekühlten Spindel erzeugt wird.

Insbesondere kann das mindestens eine Wärmerohr als Heat-Pipe ausgebildet sein. Dies hat den Vorteil, dass unabhängig von der Orientierung des Wärmerohrs der Kreislauf des Wärmeübertragungsmediums im Rohr aufgrund der Kapilarwirkung aufrecht erhalten bleibt. Speziell ist dies von Bedeutung bei Maschinenkomponenten, wenn die Wärme nach unten bzw. in Richtung der Schwerkraft transportiert werden soll. Aber auch bei Werkzeugmaschinen, deren Spindel beispielsweise ständig ihre Raumrichtung ändert, ist die Orientierungsunabhängigkeit des Wärmerohrs zur Erzielung hoher Genauigkeit notwendig.

Des Weiteren kann das mindestens eines Wärmerohr der Werkzeugmaschine ein Wasser-Kupfer-Wärmerohr sein. Derartige Wärmerohre sind kostengünstig in der Herstellung und unproblematisch im Betrieb.

Ferner kann die Spindel von einem Kühlmantel umgeben sein, zu dessen Achse das mindestens eine Wärmerohr parallel verläuft. Diese Anordnung gewährleistet, dass eine einfache Kühlkanalstruktur eingesetzt werden kann und dennoch eine hohe Homogenität der Temperaturverteilung in axialer Richtung der Spindel gegeben ist. Gegebenenfalls können Wärmerohre auch ringförmig um die Spindel angeordnet sein, um bei einer einfachen Kühlkanalstruktur eine homogene Temperaturverteilung in Umfangsrichtung zu erreichen.

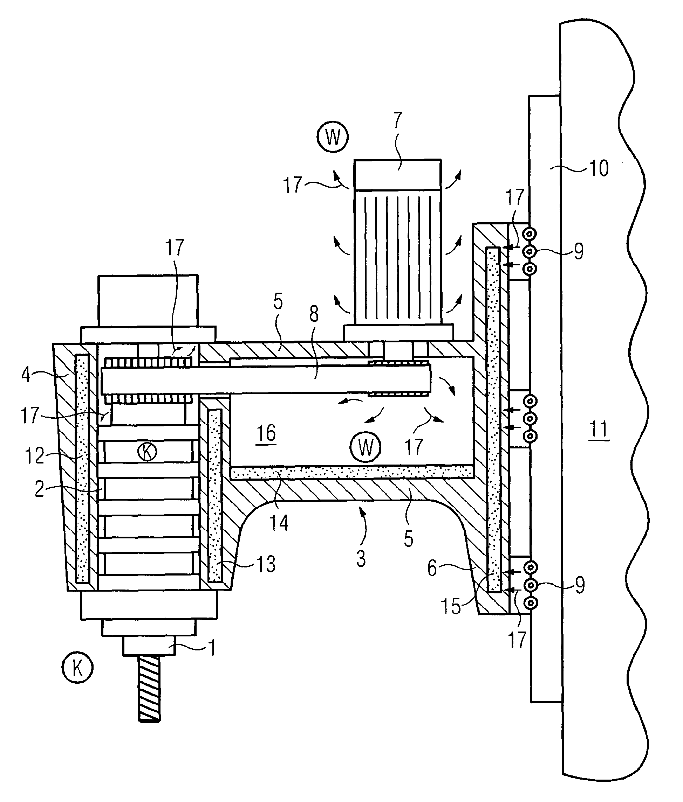

Die vorliegende Erfindung wird nun anhand der beigefügten Zeichnung näher erläutert, die eine Werkzeugmaschine mit mehreren Wärmerohren zeigt.

Das nachfolgend näher geschilderte Ausführungsbeispiel stellt eine bevorzugte Ausführungsform der vorliegenden Erfindung dar.

In der Figur ist eine Teilschnittansicht einer Werkzeugmaschine mit Spindel 1 wiedergegeben. Die Spindel 1 ist von einem Kühlmantel 2 umgeben, der eine verbesserte Kühlung insbesondere mit einem speziellen Kühlmittel erlaubt. Weiterhin ist die Spindel 1 einschließlich des Kühlmantels 2 in einem Spindelstock 3 befestigt, der spindelseitig die Spindel 1 selbst einschließlich des Kühlmantels 2 ebenfalls mantelförmig umgibt. Dieser Teil des Spindelstocks 3 sei hier als Spindelstockzylinder 4 bezeichnet. Weiterhin besitzt der Spindelstock 3 einen Querträger 5 und einen Führungsfuß 6. Der Querträger 5 verbindet den Spindelstockzylinder 4 mit dem Führungsfuß 6. Diese Komponenten können einteilig verbunden sein und den Spindelstock 3 bilden.

An dem Querträger 5 ist hier ein Elektromotor 7 angebracht. Er treibt mit einem Riemen 8 die Spindel 1 an. Anstelle der riemengetriebenen Spindel kann in dem Spindelstock 3 auch eine Motorspindel, bei der der Elektromotor koaxial mit der Spindel angeordnet ist und gegebenenfalls die Spindel direkt antreibt angeordnet sein. Grundsätzlich sind auch andere Bauformen der Werkzeugmaschine, insbesondere der Spindel und des Spindelstocks, hier denkbar.

An dem Führungsfuß 6 sind Führungsschuhe 9 befestigt. Diese sind hier linear an einer Schiene 10 beweglich angeordnet, welche selbst an einem Maschinenkörper 11 befestigt ist.

In oder an dem Spindelstock sind mehrere Wärmerohre 12, 13, 14 und 15 angeordnet. Insbesondere befinden sich in dem in der Figur dargestellten Beispiel in dem Spindelstockzylinder 4 zwei annähernd zu der Spindel 1 parallel verlaufende Wärmerohre 12 und 13. Außerdem befindet sich ein Wärmerohr 14 in einem Hohlraum 16 des Querträgers 5. Ein weiteres Wärmerohr 15 ist in dem Führungsfuß 6 parallel zu der Bewegungsrichtung bzw. der Schiene 10 angeordnet.

Die Funktionsweise der einzelnen Wärmerohre wird nachfolgend im Detail dargestellt. Die Wärmerohre 12 und 13 in dem Spindelstockzylinder 4 dienen dazu, eine homogene Temperierung in axialer Richtung entlang der Spindel 1 in deren Gehäuse bzw. im Spindelstock 3 zu erhalten. Gegebenenfalls können auch ringförmige Wärmerohre in dem Spindelstockzylinder 4 dafür sorgen, dass die Wärme dort in Umfangsrichtung besser verteilt wird.

Temperaturgefälle in der Spindel 1 bzw. dem Spindelstockzylinder 4 ergeben sich durch verschiedenste Wärmequellen und Wärmesenken. Wärmequellen wären beispielsweise der Antrieb an dem werkzeugseitig gegenüberliegenden Ende der Spindel 1 sowie die einzelnen Lager der Spindel 1. Wärmesenken wären beispielsweise die Kühlkanäle des Kühlmantels 2 sowie der Spindelkopf, der von außen durch ein Kühlmittel (z.B. Bohrwasser) gekühlt werden könnte. Die Wärmesenken sind in der Figur mit einem "K" gekennzeichnet, was auf kalte Stellen hinweist. Warme Stellen hingegen sind mit einem "W" gekennzeichnet. Diese Kennzeichnung ist jedoch nur exemplarisch und nicht vollständig.

Weiterhin deuten Pfeile 17 in der FIG einen Wärmestrom an. Insbesondere wird von dem Elektromotor 7 Wärme erzeugt. Diese fließt hier in das Gehäuse bzw. den Spindelstock 3 und insbesondere in den Querträger 5. Dadurch ergeben sich hohe Temperaturdifferenzen in dem Querträger 5 bzw. den angrenzenden Komponenten 4 und 6. Aufgrund der Temperaturdifferenzen würde sich der Spindelstock verziehen, und eine Ungenauigkeit der Werkzeugmaschine wäre die Folge. Daher wird symbolisch angedeutet durch das Wärmerohr 14 in dem Querträger 5 ein Wärmeausgleich geschaffen, der für den Wärmeeintrag des Elektromotors 7 notwendig ist.

Eine weitere Wärmequelle kann in den Führungsschuhen 9 bzw. deren Lagerung an der Führungsschiene 10 erkannt werden. Die in den Führungslagern der Führungsschuhe 9 erzeugte Wärme kann den Führungsfuß 6 positionsabhängig wärmen. Daher ist entlang der Anordnung der Führungsschuhe 9, d. h. parallel zu der Führungsschiene 10 in dem Führungsfuß 6 ein weiteres Wärmerohr 15 vorgesehen. Es sorgt für eine homogenere Temperaturverteilung in dem gesamten Führungsfuß 6.

Zu dem in der Figur exemplarisch angedeuteten Wärmerohren können weitere hinzugefügt werden. Es kann aber auch das ein oder andere Wärmerohr weggelassen werden. Hinzugefügt werden können Wärmerohre beispielsweise auch in der Führungsschiene 10 bzw. dem Maschinenkörper 11. Weiterhin können Wärmerohre in oder an den Elektromotor 7 bzw. die Spindel 1 montiert werden. Auch an der äußeren Oberfläche des Spindelstocks 3 können Wärmerohre angebracht werden.

Wie in dem oben geschilderten Beispiel können erfindungsgemäß Wärmerohre gezielt in Spindelstöcke oder Maschinenkomponenten eingebracht werden. Dadurch lässt sich eine homogene Temperatur in der Struktur erzielen. Durch diese Anwendung der Wärmerohre ergeben sich folgende Vorteile:

Durch die Wärmerohre können Wärmemengen sehr schnell und ohne große Temperaturgefälle in Maschinenstrukturen verteilt werden. Es können so verhältnismäßig hohe Wärmestromdichten durch die Wärmerohre gewährleistet werden. Beispielsweise lassen sich durch Wasser-Kupfer-Wärmerohre Wärmestromdichten bis zu 40 W/cm² realisieren. Die Wärmeleitfähigkeit von Heat-Pipes kann bis zu eintausendmal besser sein als die eines in den Abmessungen vergleichbaren Kupferstabs. Es lassen sich also mit den Wärmerohren wesentlich rascher als mit herkömmlichen Mitteln eine geringe Temperaturdifferenz zwischen Wärmequelle und Wärmesenke herstellen.

Ein weiterer Vorteil der Wärmerohre besteht darin, dass das Fluid im Inneren antriebslos zirkuliert. Es sind also keine grundsätzlichen Komponenten für den Wärmetransport erforderlich. Dies hat zum einen einen geräuscharmen bzw. geräuschlosen Betrieb zur Folge. Zum anderen lässt sich dadurch aber auch eine hohe Zuverlässigkeit eben aufgrund des Fehlens von bewegten oder hochbelasteten Teilen erreichen.

Ein weiterer Vorteil von Wärmerohren kann darin gesehen werden, dass diese auch in poröse (Gussteile) oder stark zergliederte Maschinenstrukturen eingebracht werden können. Leckagen sind dabei ausgeschlossen.

Wie oben gezeigt ist, können Wärmerohre gezielt in Spindelstöcke oder Maschinenstrukturen eingebracht werden. Dabei kann zwischen zwei Anwendungsgebieten unterschieden werden: Einerseits lässt sich eine homogene Temperatur im Spindelstock oder der Maschinenstruktur ohne externe Kühlung der Wärmerohre erzielen. Andererseits können die Wärmerohre aber auch zur Kühlung genutzt werden. Eine Kombination beider Anwendungen kann dazu genutzt werden, um eine homogene Temperatur im Spindelstock oder der Maschinenstruktur bei gleichzeitiger Kühlung zu erzielen. Werden Wärmerohre auch zur Kühlung von Spindelstöcken und/oder Maschinenstrukturen genutzt, so sind die Wärmesenken bzw. Enden der Wärmerohr mit einer Flüssigkeit oder mit einem Gas, vorzugsweise Luft, zu kühlen. Die Wärmetauscher können aufgrund der Form und der Struktur der Wärmerohre sehr einfach aufgebaut werden. Auch hier bereiten poröse oder stark zergliederte Maschinenstrukturen keine Probleme.

## Patentansprüche

1. Werkzeugmaschine mit
- einer Spindel (1) zur rotatorischen Bewegung eines Werkzeugs,
- einem Motor (7) zum Antrieb der Spindel (1) und
- einem Spindelstock (3) , in oder an dem die Spindel (1) angeordnet ist,
**dadurch gekennzeichnet, dass**
- mindestens ein Wärmerohr (12 bis 15) in oder an dem Spindelstock (3) oder der Spindel (1) angeordnet ist, um ein Temperaturgefälle in der jeweiligen Komponente zu reduzieren.

2. Werkzeugmaschine nach Anspruch 1, die eine aktive Kühleinrichtung aufweist, um ein Ende des Wärmerohrs (12 bis 15) aktiv zu kühlen.

3. Werkzeugmaschine nach Anspruch 1 oder 2, wobei an dem Spindelstock (3) mindestens zwei Führungsschuhe (9) zur beweglichen Befestigung an einem Maschinenkörper (11) angebracht sind, und das mindestens eine Wärmerohr (12 bis 15) parallel zu einer Geraden, welche durch je eine Punkt in jedem der zwei Führungsschuhe (9) definiert ist, verläuft.

4. Werkzeugmaschine nach einem der vorhergehenden Ansprüche, wobei das mindestens eine Wärmerohr (12 bis 15) parallel zu der Drehachse der Spindel (1) verläuft.

5. Werkzeugmaschine nach einem der Ansprüche 1 bis 3, wobei die Spindel (1) von dem Motor (7) durch einen Riemen (8) angetrieben ist, und das mindestens eine Wärmerohr (12 bis 15) parallel zu dem Riemen (8) verläuft.

6. Werkzeugmaschine nach einem der vorhergehenden Ansprüche, wobei das mindestens eine Wärmerohr (12 bis 15) als Heat-Pipe ausgebildet ist.

7. Werkzeugmaschine nach einem der vorhergehenden Ansprüche, wobei das mindestens eine Wärmerohr (12 bis 15) ein Wasser-Kupfer-Wärmerohr ist.

8. Werkzeugmaschine nach einem der vorhergehenden Ansprüche, wobei die Spindel (1) von einem Kühlmantel (2) umgeben ist, zu dessen Achse das mindestens eine Wärmerohr (12 bis 15) parallel verläuft.
